# EUROPEAN PATENT APPLICATION

(11) **EP 4 593 335 A1**
(43) Date of publication of application: **30.07.2025**
(21) Application number: 22959068.2
(22) Date of filing: 21.09.2022
(51) Int. Cl.: H04L 27/00

(54) **INFORMATION PROCESSING METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: LIU, Jianning, Beijing 100085 (CN)
(74) Representative: Stöckeler, Ferdinand
(86) International application number: PCT/CN2022/120179
(87) International publication number: WO 2024/060057

(57) **Abstract**

Embodiments of the present disclosure provide an information processing method and apparatus, a communication device, and a storage medium. The method is performed by a source user equipment (UE), and comprises: broadcasting relay information, wherein the relay information is used to indicate whether or not the source UE can serve as a target UE for user equipment-to-user equipment (U2U) relay communication.

## Description

### TECHNICAL FIELD

The disclosure relates to the field of wireless communication technologies, but not limited to the field of the wireless communication technologies, and particularly to a method and an apparatus for processing information.

### BACKGROUND

A user equipment (UE) can communicate with other equipment UE with the help of a relay equipment when located within a coverage of a 3Gpp network or outside a coverage of a network. A UE providing such relay communication may be called a UE to UE (U2U) relay.

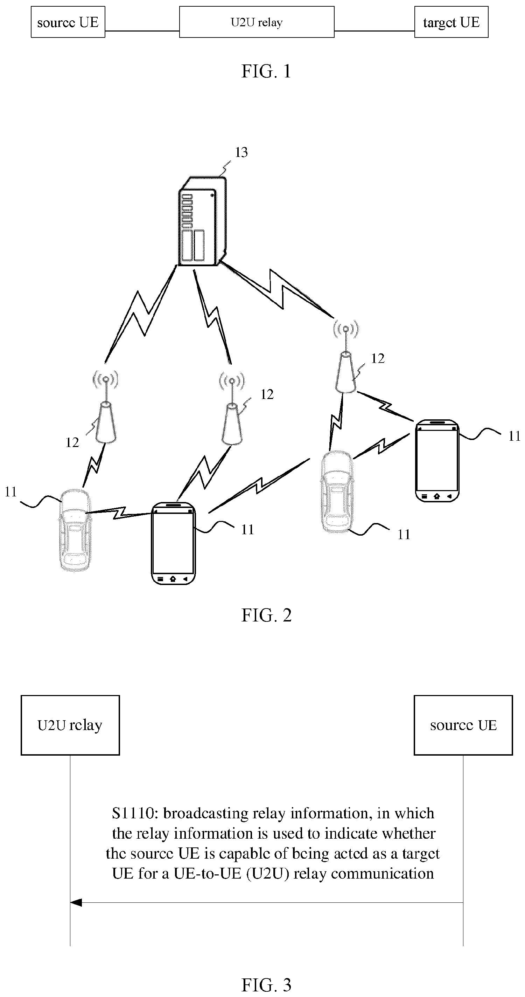

FIG. 1 is a schematic diagram illustrating a U2U relay communication between a source UE and a target UE. In this way, even if a direct side link (SL) may not be directly established between the source UE and the target UE, communication may be performed with the help of other UE (i.e., a U2U relay).

### SUMMARY

Embodiments of the disclosure provide a method and an apparatus for processing information, a communication device and a storage medium.

A first aspect of embodiments of the disclosure provides a method for processing information, performed by a source user equipment (UE). The method includes:
broadcasting relay information, in which the relay information is used to indicate whether the source UE is capable of acting as a target UE of a UE-to-UE (U2U) relay communication.

A second aspect of embodiments of the disclosure provides a method for processing information, performed by a user equipment to user equipment (U2U) relay. The method includes:
receiving relay information sent by a source UE, in which the relay information is used to indicate whether the source UE is capable of acting as a target UE of a U2U relay communication.

A third aspect of embodiments of the disclosure provides an apparatus for processing information. The apparatus includes:
a sending module, configured to broadcast relay information, in which the relay information is used to indicate whether the source UE is capable of acting as a target UE of a UE-to-UE (U2U) relay communication.

A fourth aspect of embodiments of the disclosure provides an apparatus for processing information. The apparatus includes:
a receiving module, configured to receive relay information sent by a source UE, in which the relay information is used to indicate whether the source UE is capable of acting as a target UE of a U2U relay communication.

A fifth aspect of embodiments of the disclosure provides a communication device, including a processor, a transceiver, a memory, and an executable program stored on the memory and capable of being run by the processor. The processor is configured to execute the method for processing information provided in the first or second aspect when running the executable program.

A sixth aspect of embodiments of the disclosure provides a computer storage medium for storing an executable program. After the executable program is executed by the processor, the method for processing information provided in the first aspect or the second aspect is realized.

With the technical solution provided by embodiments of the disclosure, the source UE may actively broadcast its own relay information when there is a need for a U2U relay communication, such that U2U relay located around the source UE may receive the relay information, and it may be determined whether the source UE is the target UE of other U2U relays without depending on broadcasting the announcement message, thus reducing an identification error for the target UE caused by the U2U relay sending the announcement message and receiving the response message in the related art, and reducing the signaling overhead caused by the U2U relay broadcasting the announcement message.

It should be understood that both the above general description and the following detailed description are exemplary and explanatory only, and are not restrictive of embodiments of the disclosure.

### BRIEF DESCRIPTION OF THE DRAWINGS

The accompanying drawings, which are incorporated in and constitute a part of this specification, illustrate embodiments consistent with the disclosure and serve to explain the principles of embodiments of the disclosure, together with the specification.
FIG. 1 is a schematic diagram illustrating a user to user (U2U) relay communication according to an exemplary embodiment.
FIG. 2 is a schematic diagram illustrating a wireless communication system according to an exemplary embodiment.
FIG. 3 is a flow chart illustrating a method for processing information according to an exemplary embodiment.
FIG. 4 is a flow chart illustrating a method for processing information according to an exemplary embodiment.
FIG. 5 is a flow chart illustrating a method for processing information according to an exemplary embodiment.
FIG. 6 is a flow chart illustrating a method for processing information according to an exemplary embodiment.
FIG. 7 is a flow chart illustrating a method for processing information according to an exemplary embodiment.
FIG. 8 is a block diagram illustrating an apparatus for processing information according to an exemplary embodiment.
FIG. 9 is a block diagram illustrating an apparatus for processing information according to an exemplary embodiment.
FIG. 10 is a block diagram illustrating a terminal according to an exemplary embodiment.
FIG. 11 is a block diagram illustrating a communication device according to an exemplary embodiment.

### DETAILED DESCRIPTION

Description will now be made in detail to exemplary embodiments, examples of which are illustrated in the accompanying drawings. The following description refers to the accompanying drawings in which same numbers in different accompanying drawings represent same or similar elements unless otherwise represented. The implementations set forth in the following description of exemplary embodiments do not represent all implementations consistent with the embodiments of disclosure. Instead, they are merely examples of apparatuses and methods consistent with some aspects related to embodiments of the disclosure.

The terms used in embodiments of the disclosure are merely for the purpose of describing a particular embodiment and are not intended to limit the embodiments of the disclosure. The terms "a" and "the" in the singular form used in of the disclosure are also intended to include the plural form, unless the context clearly indicates other meaning. It should also be understood that the term "and/or" as used herein refers to any or all possible combinations of one or more associated listed items.

It should be understood that although the terms first, second, third, etc. may be used to describe various information in embodiments of the disclosure, such information should not be limited to these terms. These terms are merely used to distinguish information in the same type from one another. For example, without leaving the scope of the embodiments of the disclosure, the first information may also be referred to as the second information, and likewise the second information may be referred to as the first information. Depending on the context, the words "if" and "in the case that" used here may be interpreted as "when" or "in response to determining".

Please refer to FIG. 2, which illustrates a schematic diagram illustrating a wireless communication system according to an embodiment of the disclosure. As illustrated in FIG. 2, the wireless communication system is a communication system based on cellular mobile communication technologies. The wireless communication system may include multiple terminals 11 and multiple access devices 12.

The terminal 11 may be a device that provides speech and/or data connectivity to a user. The terminal 11 may communicate with one or more core networks via a radio access network (RAN). The terminal 11 may be an Internet of Things terminal, such as a sensor device, a mobile phone (or cellular phone) and a computer with the Internet of Things terminal. For example, the terminal may be a fixed, portable, pocket-sized, handheld, computer-built or vehicle-mounted device. For example, a station (STA), a subscriber unit, a subscriber station, a mobile station, a mobile, a remote station, an access point, a remote terminal, an access terminal, a user terminal, a user agent, a user device, or a user equipment. Alternatively, the terminal 11 may be a device of an unmanned aerial vehicle. Alternatively, the terminal 11 may also be a vehicle-mounted device, such as, a driving computer with a wireless communication function, or a wireless communication device externally connected to a driving computer. Alternatively, the terminal 11 may also be a roadside device, such as a street lamp, a signal lamp or other roadside device with the wireless communication function.

The access device 12 may be a network-side device in the wireless communication system. The wireless communication system can be the 4th generation mobile communication (4G) system, also called long term evolution (LTE) system. Alternatively, the wireless communication system may also be a 5G system, also called a new radio (NR) system or a 5G NR system. Alternatively, the wireless communication system may also be a following generation system of the 5G system. An access network in the 5G system may be called a new generation-radio access network (NG-RAN), or a machine type communication (MTC) system.

The access device 12 may be an evolved access device (eNB) employed in the 4G system. Alternatively, the access device 12 may also be an access device (gNB) employing a centralized and distributed architecture in the 5G system. When the access device 12 employs the centralized and distributed architecture, the access device 12 usually includes a central unit (CU) and at least two distributed units (DUs). The CU is provided with a packet data convergence protocol (PDCP) layer, a radio link control protocol (RLC) layer and a media access control (MAC) layer; and the DU is provided with a physical (PHY) layer protocol stack. A detailed implementation of the access device 12 is not limited in the embodiments of the disclosure.

A wireless connection may be established between the access device 12 and the terminal 11 via a wireless air interface. In different implementations, the wireless air interface is a wireless air interface based on the 4G network technology standard. Alternatively, the wireless air interface is a wireless air interface based on a 5G network technology standard. For example, the wireless air interface is a new air interface. Alternatively, the wireless air interface may also be a wireless air interface based on a next generation mobile communication network technology standard of 5G.

The UE may determine whether the UE may become a U2U relay based on a configuration policy. The U2U relay may determine a user information indication (User Info ID) and a Layer-2 ID of a target UE. The U2U relay may broadcast an announcement message. For example, the U2U relay may perform a discovery procedure based on a model A and a model B, and announce information of the target UE discovered based on the discovery procedure to a source UE.

In order to implement update of the target UE, the U2U relay may perform the discovery procedure periodically and broadcast the announcement message periodically.

The source UE may monitor the announcement message and select the U2U relay to communicate with the target UE based on a monitored announcement message.

In the case that the model A is used to find the target UE, the U2U relay needs to send different announcement messages, and the target UE needs to return a response message to the U2U relay after receiving the announcement message.

As illustrated in FIG. 3, embodiments of the disclosure provide a method for processing information, performed by a source UE. The method includes:
S1110: broadcasting relay information, in which the relay information is used to indicate whether the source UE is capable of acting as a target UE for a UE-to-UE (U2U) relay communication.

The source UE here is any UE that initiates the U2U relay communication, that is, an initiating end of the U2U relay communication, and a name of the UE is not limited to the source UE, and may also be called a first UE, etc.

The source UE may be a communication terminal such as a mobile UE or a fixed UE. In detail, the source UE includes, but is not limited to, a mobile phone, a tablet, a wearable device, a vehicle-mounted device, a smart home device and/or a smart office device.

The target UE is a receiving end of the U2U relay communication, and a name of the UE is not limited to the target UE, and may also be called a second UE, etc.

The relay information broadcast by the source UE may include:
relay information transmitted on a sidelink (SL) broadcast channel.

The source UE broadcasts its own relay information on the broadcast channel, that is, for example, the source UE broadcasts the relay information during a procedure of a U2U relay discovery or establishing a relay link with the U2U relay. In this way, the U2U relay may determine whether the source UE may act as the target UE of the U2U relay.

For example, the relay information of the source UE indicates that the source UE may act as the target UE of the U2U relay communication, which can be understood as indicating at least one of:
the source UE being capable of acting as the target UE of the U2U relay communication;
the source UE being willing to act as the target UE of the U2U relay communication;
The source UE intending to act as the target UE of the U2U relay communication;
the source UE being capable of acting as the target UE of the U2U relay communication;
the source UE acting as the target UE of the U2U relay communication;
The source UE supporting acting as the target UE of the U2U relay communication.

It is worth noting that the U2U relay communication here is not a current U2U relay communication initiated by the source UE, but a subsequent U2U relay communication.

In a word, in embodiments of the disclosure, the source UE actively broadcasts its own relay information, such that the source UE can be used to determine information whether the source UE is capable of acting as the target UE of another U2U relay communication when there is a communication requirement. In this way, the target UE that may participate in the U2U relay communication around the U2U relay may be identified without the U2U relay sending the announcement message and receiving the response message, which has characteristics of a low signaling overhead and a high accuracy.

In some embodiments, the relay information includes:
relay hop count information, indicating a relay hop count supported when the source UE acts as the target UE in the U2U relay communication;
   and/or
a relay indication, indicating whether the source UE is capable of acting as the target UE of the U2U relay communication.

In an embodiment, the relay information may include the relay hop count information alone, and the relay hop count information may indicate the relay hop count supported when the source UE of the current U2U relay communication acts as the target UE of the U2U relay communication. At this time, in the case that the source UE supports acting as the target UE of the U2U relay communication, the relay hop count is at least 1. In the case that the source UE does not support acting as the target UE of the U2U relay communication, the relay hop count is 0 or a value of the relay hop count is NULL. In this way, even if the relay information only includes the relay hop count information, the U2U relay may simply know whether the source UE supports the target UE acting as the U2U relay, and simultaneously know the relay hop count supported when the source UE acts as the target UE of the U2U relay communication.

In another embodiment, the relay information may separately include the relay indication. The relay indication may directly indicate whether the source UE supports acts as the target UE of the U2U relay communication.

For example, the relay indication may be carried by one bit, and two bit values of the bit may respectively represent that the source UE supports acting as the target UE of the U2U relay communication, or does not support acting as the target UE of the U2U relay communication.

In yet another embodiment, the relay information includes both the relay hop count information and the relay indication.

The relay hop count information indicates the relay hops supported when the source UE acts as the target UE of the U2U relay communication. The relay indication may be used for the U2U relay to quickly know whether the source UE is capable of acting as the target UE of the U2U relay communication. In some cases, the relay indication may also be used for the U2U relay to determine whether there needs to further decode the relay hop count information. In the case that the relay indication indicates that the source UE does not support being serving as the target UE of the U2U relay communication, the U2U relay does not need to decode the relay hop count information, thus reducing unnecessary decoding.

In some cases, the source UE has a capability of acting as the target UE of the U2U relay communication, but the source UE is unwilling to act as the target UE of the U2U relay communication based on an indication of a user. In some cases, the source UE does not have a capability of acting as the target UE of the U2U relay communication. For example, in the case that the source UE is not authorized by a network side that the source UE acts as the target UE of the U2U relay communication, it shows that the source UE does not have one of the capabilities of acting as the target UE of the U2U relay communication.

In some embodiments, the source UE is capable of acting as the target UE of the U2U relay communication, and the relay hop count information indicates that the relay hop count supported by the source UE is greater than 0. Alternatively, the source UE is unwilling to act as the target UE of the U2U relay communication, and the relay hop count information indicates that the relay hop count supported by the source UE is equal to 0 or the value of the relay hop count information is NULL.

In other embodiments, when the source UE is capable of acting as the target UE of the U2U relay communication, the relay indication is a first value; or, when the source UE is unwilling to act as the target UE of the U2U relay communication, the relay indication is a second value.

The second value is different from the first value.

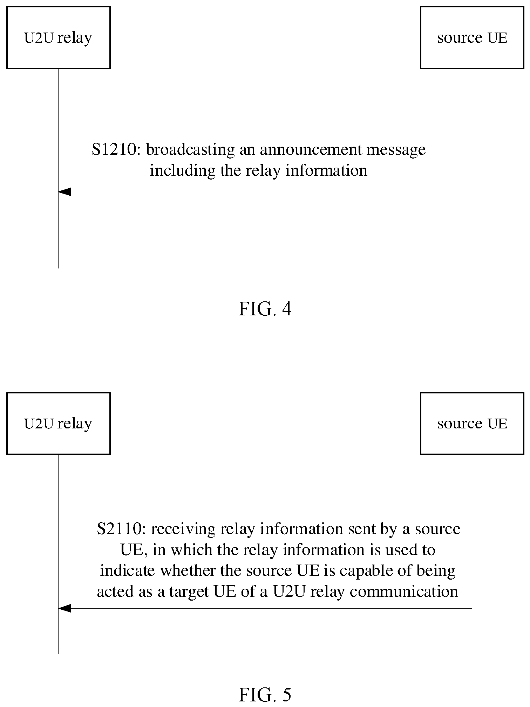

As illustrated in FIG. 4, embodiments of the disclosure provide a method for processing information, performed by a source UE. The method includes:
S1210: broadcasting an announcement message including the relay information.

The announcement message may be an announcement message sent when the source UE has a requirement of the U2U relay communication. In this way, when the U2U relay monitors the announcement message, the U2U may not only know that the UE has the requirement of the U2U relay communication, but also know that the source UE is capable of acting as the target UE of the U2U relay.

As illustrated in FIG. 5, embodiments of the disclosure provide a method for processing information, performed by a U2U relay. The method includes:
S2110: receiving relay information sent by a source UE, in which the relay information is used to indicate whether the source UE is capable of acting as a target UE of a U2U relay communication.

In embodiments of the disclosure, the U2U relay may receive the relay information, and may determine whether the source UE is capable of acting as the target UE of a subsequent U2U relay communication based on the relay information provided by the source UE.

For example, the U2U relay monitors the relay information, and the U2U relay may add the relay information to information of the target UE. For example, the U2U relay monitors a sidelink broadcast channel, thus obtaining the relay information of the U2U relay.

The information of the target UE may include a user information ID of the target UE and/or a layer-two ID.

The U2U relay may be various communication devices. For example, the U2U relay may be various mobile UEs.

The mobile UE includes, but is not limited to, a mobile phone, a tablet, a wearable device, a vehicle-mounted device, a smart home device and/or a smart office device.

The U2U relay may be a device which may provide a U2U relay service and is authorized by a network device. For example, the U2U relay may be a UE and/or a wireless device deployed or designated by a communication operator. For another example, the U2U relay may be a device located within a coverage area of a 3Gpp network or outside the coverage area of the 3Gpp network.

For example, S2110 may include: receiving the relay information sent by the source UE by monitoring an SL broadcast channel.

The source UE actively broadcasts the relay information only when the UE itself supports and/or is willing to act as the target UE of the U2U relay, such that the accuracy is high compared with the relay information broadcast by the U2U relay itself. The U2U relay does not need to rebroadcast an announcement message, thus reducing the procedure of discovering the target UE by the U2U relay.

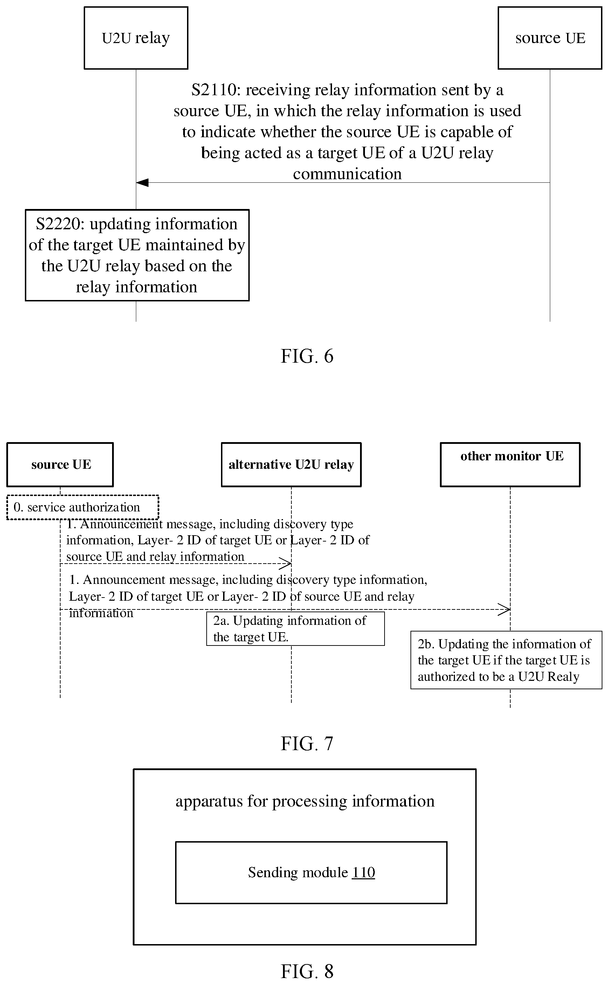

As illustrated in FIG. 6, embodiments of the disclosure provide a method for processing information, performed by a U2U relay. The method includes:
S2210: receiving relay information sent by a source UE, in which the relay information is used to indicate whether the source UE is capable of acting as a target UE of a U2U relay communication.
S2220: updating information of the target UE maintained by the U2U relay based on the relay information.

After the relay information is received from a source UE transmitter, the U2U relay adds newly monitored information of the source UE to the information of the target UE maintained by the U2U relay in the case that it is discovered based on the relay information that information of the source UE is not added to the information of the target UE.

In an embodiment, the method further comprises:
determining whether the information of the target UE expires;

In the case that the information of the target UE expires, the expired information in the information of the target UE is deleted.

In other embodiments, the method also includes:
in the case that it is determined that information is added to the target UE based on the relay information, an effective timer corresponding to the source UE indicated by the relay information is updated. In the case that the relay information indicating that the source UE is capable of acting as the target UE is not received within a timing range of the effective timer, the information of the source UE is deleted from the information of the target UE.

For example, the U2U relay maintains a list including the information of the target UE.

In some embodiments, the relay information includes:
relay hop count information, indicating a relay hop count supported when the source UE acts as the target UE in the U2U relay communication;
   and/or
a relay indication, indicates whether the source UE is capable of acting as the target UE of the U2U relay communication.

In an embodiment, the relay information may only include the relay hop count information, and the relay hop count information may indicate the relay hop count supported when the source UE of the U2U relay communication acts as the target UE of the U2U relay communication. At this time, in the case that the source UE supports acting as the target UE of the U2U relay communication, the relay hop count is at least 1. In the case that the source UE does not support acting as the target UE of the U2U relay communication, the relay hop count is 0 or a value of the relay hop count is NULL. In this way, even if the relay information only includes the relay hop count information, the U2U relay can simply know whether the source UE supports the target UE acting as the U2U relay, and simultaneously know the relay hop count supported when the source UE acts as the target UE of the U2U relay communication.

In another embodiment, the relay information may separately include the relay indication. The relay indication may directly indicate whether the source UE supports acting as the target UE of the U2U relay communication.

For example, the relay indication may be carried by one bit, and two bit values of the bit may respectively represent that the source UE supports acting as the target UE of the U2U relay communication, or does not support acting as the target UE of the U2U relay communication.

In yet another embodiment, the relay information includes both the relay hop count information and the relay indication.

The relay hop count information indicates the relay hops supported when the source UE acts as the target UE of the U2U relay communication. The relay indication may be used for the U2U relay to quickly know whether the source UE is capable of acting as the target UE of the U2U relay communication. In some cases, the relay indication may also be used for the U2U relay to determine whether there needs to further decode the relay hop count information. In the case that the relay indication indicates that the source UE does not support being serving as the target UE of the U2U relay communication, the U2U relay does not need to decode the relay hop count information, thus reducing unnecessary decoding.

In some cases, the source UE has a capability of acting as the target UE of the U2U relay communication, but the source UE is unwilling to act as the target UE of the U2U relay communication based on an indication of a user. In some cases, the source UE does not have a capability of acting as the target UE of the U2U relay communication. For example, in the case that the source UE is not authorized by a network side that the source UE acts as the target UE of the U2U relay communication, it shows that the source UE does not have one of the capabilities of acting as the target UE of the U2U relay communication.

In some embodiments, updating the information of the target UE maintained by the U2U relay based on the relay information includes the following.

In some embodiments, the method also includes:
adding the information of the source UE to the information of the target UE, the relay indication being a first value;
   or
ignoring the relay information, the relay indication being a second value.

In some embodiments, the first value is different from the second value. For example, in the case that the relay indication corresponds to 1 bit, two bit values (the first value and the second value) of the bit may be "0" and "1" respectively.

Of course, the above is only an example of the relay information, and a detailed implementation is not limited to the above examples.

**As** illustrated in FIG. 7, embodiments of the disclosure provide a method for processing information. The method may include: 0. the U2U relay has collected a target UE list, for example, pre-configured or previously discovered, or there is communication or previous communication between the U2U relay and the target UE.
1. a UE relays and sends an announcement message regularly. The announcement message includes an announcement message type, a user information ID of a UE relay, a relay service code (RSC), a list of user information ID of the target UE, and a list of UE layer-2 ID. The source layer-2 ID of the announcement message is assigned by the U2U relay, and the layer-2 ID of the target UE is selected by the configured policy. The policy be a policy pre-configured by the operator, etc. Different relay services have different RSCs. The list of the user information ID of the target UE actually includes a U2U relay communication candidate device of the target UE.
2. When the source UE determines discovering the source UE through the U2U relay, the source UE sends a direct communication request (DCR) message to the U2U relay. The direct communication request may include relay information indicating that the U2U relay is capable of discovering the source UE. The relay information may alternatively indicate a hop count.

For example, if the hop count indicated by the relay information is 0, the relay UE may not broadcast the announcement message.

If the hop count indicated by the relay information is 1, the source UE of the current U2U relay communication is allowed to act as the target UE of the subsequent U2U relay communication.

**2a.** When the U2U relay receives the DCR message including the relay indication, the U2U updates the target UE list and further performs security/authentication to check whether the source UE may be added to the target UE list.

Alternatively, if necessary, an L2 link is further established between the source UE and the U2U relay.

2b. The U2U relay sends a direct communication reception message to the source UE, including a reception result.

As illustrated in FIG. 8, embodiments of the disclosure provide an apparatus for processing information. The apparatus includes:
a sending module 110, configured to receive relay information sent by a source UE, in which the relay information is used to indicate whether the source UE is capable of acting as a target UE of a U2U relay communication.

The apparatus for processing information may be included in the source UE.

The sending module may include a transceiver antenna, etc.

The apparatus for processing information may further include a storage module. The storage module may be connected with a broadcasting module 110, and at least may be configured to store relay information.

In some embodiments of the disclosure, the relay information includes:
relay hop count information, indicating a relay hop count supported when the source UE acts as the target UE in the U2U relay communication;
   and/or
a relay indication, indicating whether the source UE is capable of acting as the target UE of the U2U relay communication.

In some embodiments of the disclosure, the source UE is willing to act as the target UE of the U2U relay communication, the relay hop count information indicating that the relay hop count supported by the source UE is greater than 0;
or
the source UE is unwilling to act as the target UE of the U2U relay communication, the relay hop count information indicating that the relay hop count supported by the source UE is equal to 0 or a value of the relay hop count information is null.

In some embodiments of the disclosure, the source UE is willing to act as the target UE of the U2U relay communication, the relay indication being a first value;
or
**the** source UE is unwilling to act as the target UE of the U2U relay communication, the relay indication being a second value.

The second value is different from the first value.

In some embodiments of the disclosure, the broadcasting module 110 is further configured to: broadcast an announcement message comprising the relay information.

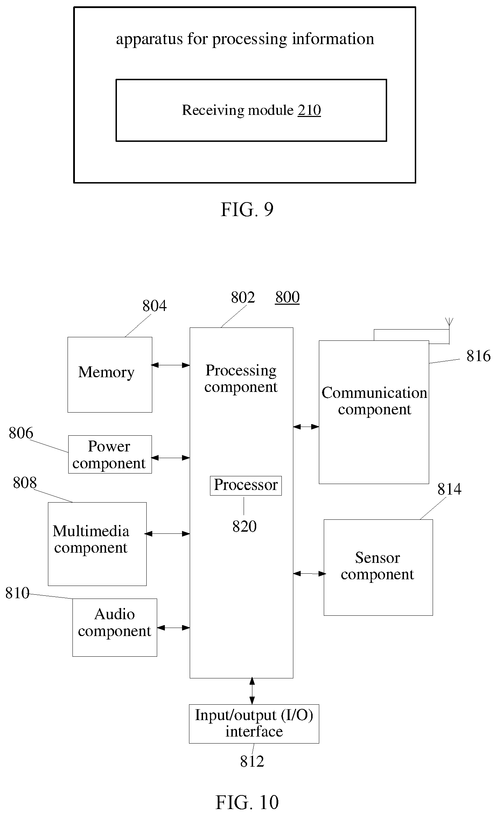

**As** illustrated in FIG. 9, embodiments of the disclosure provide an apparatus for processing information. The apparatus includes:
a receiving module 210, configured to receive relay information sent by a source UE, in which the relay information is used to indicate whether the source UE is capable of acting as a target UE of a U2U relay communication.

In some embodiments, the apparatus for processing information may be a source UE. The source UE also includes a storage module. The storage module is connected to the receiving module 210 and may at least be configured to store relay information.

The receiving module 210 may correspond to a transceiver antenna or the like.

In some embodiments, the apparatus also includes:
a processing module, configured to update information of the target UE maintained by the U2U relay based on the relay information.

The processing module may be various processors and the like. The processor includes, but is not limited to, a microprocessor, an embedded processor, a central processing unit and/or a digital signal processor.

In some embodiments, the relay information includes:
relay hop count information, indicating a relay hop count supported when the source UE acts as the target UE in the U2U relay communication;
   and/or
a relay indication, indicating whether the source UE is capable of acting as the target UE of the U2U relay communication.

In some embodiments, updating the information of the target UE maintained by the U2U relay based on the relay information includes:
adding information of the source UE to the information of the target UE, the relay hop count indicated by the relay hop count information being greater than 0;
   or
ignoring the relay information, the relay hop count indicated by the relay hop count information being equal to 0 or a value of the relay hop count information being null.

In some embodiments, the apparatus also includes:
**a** processing module, configured to add information of the source UE to the information of the target UE, the relay indication being a first value;
or ignore the relay information, the relay indication being a second value.

Embodiments of the disclosure provide a communication device, including:
a memory for storing instructions executable by a processor; and
the processor, respectively connected to the memory.

The processor is configured to execute the method for processing information provided by any of the above technical solutions.

The processor may include various types of storage mediums. The storage medium is a non-transitory computer storage medium, and may continuously remember information stored on the communication device after power failure.

Here, the communication device includes the above source UE and/or U2U relay.

The processor may be connected to the memory via a bus or the like for reading the executable program stored in the memory, for example, at least one of the methods illustrated in FIGs. 3 to 7.

FIG. 10 is a block diagram illustrating a terminal 800 according to an exemplary embodiment. For example, the terminal 800 may be a mobile phone, a computer, a digital broadcast terminal, a messaging transceiver, a game console, a tablet, a medical device, an exercise device, a personal digital assistant, and so on.

Referring to FIG. 10, the terminal 800 may include one or more of: a processing component 802, a memory 804, a power component 806, a multimedia component 808, an audio component 810, an input/output (I/O) interface 812, a sensor component 814, and a communication component 816.

The processing component 802 normally controls the overall operation (such as operations associated with displaying, telephone calls, data communications, camera operations and recording operations) of the terminal 800. The processing component 802 may include one or more processors 820 to execute instructions so as to perform all or part of the steps of the above method. In addition, the processing component 802 may include one or more units to facilitate interactions between the processing component 802 and other components. For example, the processing component 802 may include a multimedia unit to facilitate interactions between the multimedia component 808 and the processing component 802.

The memory 804 is configured to store various types of data to support operations at the terminal 800. Examples of such data include instructions for any application or method operated on the terminal 800, contact data, phone book data, messages, images, videos and the like. The memory 804 may be realized by any type of volatile or non-volatile storage devices, or a combination thereof, such as a static random access memory (SRAM), an electrically erasable programmable read only memory (EEPROM), an erasable programmable read only memory (EPROM), a programmable read only memory (PROM), a read only memory (ROM), a magnetic memory, a flash memory, a disk or an optical disk.

The power component 806 provides power to various components of the terminal 800. The power component 806 may include a power management system, one or more power sources and other components associated with power generation, management, and distribution of the terminal 800.

The multimedia component 808 includes a screen that provides an output interface between the terminal 800 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touches, slides, and gestures on the touch panel. The touch sensor may sense not only the boundary of the touches or sliding actions, but also the duration and pressure related to the touches or sliding operations. In some embodiments, the multimedia component 808 includes a front camera and/or a rear camera. When the terminal 800 is in an operation mode such as a shooting mode or a video mode, the front camera and/or the rear camera may receive external multimedia data. Each front camera and rear camera may be a fixed optical lens system or have a focal length and an optical zoom capability.

The audio component 810 is configured to output and/or input an audio signal. For example, the audio component 810 includes a microphone (MIC) that is configured to receive an external audio signal when the terminal 800 is in an operation mode such as a call mode, a recording mode, and a voice recognition mode. The received audio signal may be further stored in the memory 804 or transmitted via the communication component 816. In some embodiments, the audio component 810 also includes a speaker for outputting audio signals.

The I/O interface 812 provides an interface between the processing component 802 and a peripheral interface unit. The peripheral interface unit may be a keyboard, a click wheel, a button and so on. These buttons may include, but are not limited to, a home button, a volume button, a start button, and a locking button.

The sensor assembly 614 includes one or more sensors for providing the terminal 800 with various aspects of status assessments. For example, the sensor component 814 may detect an ON/OFF state of the terminal 800 and a relative positioning of the components. For example, the components may be a display and a keypad of the terminal 800. The sensor component 814 may also detect a change in position of the terminal 800 or a component of the terminal 800, the presence or absence of contact of the user with the terminal 800, the orientation or acceleration/deceleration of the terminal 800 and a temperature change of the terminal 800. The sensor component 814 may include a proximity sensor configured to detect the presence of nearby objects without any physical contact. The sensor component 814 may also include a light sensor, such as a CMOS or a CCD image sensor, for use in imaging applications. In some embodiments, the sensor component 814 may also include an acceleration sensor, a gyro sensor, a magnetic sensor, a pressure sensor, or a temperature sensor.

The communication component 816 is configured to facilitate wired or wireless communication between the terminal 800 and other devices. The terminal 800 may access a wireless network based on a communication standard such as 2G, 3G, 4G, 5G or a combination thereof. In an exemplary embodiment, the communication component 816 receives broadcast signals or broadcast-associated information from an external broadcast management system via a broadcast channel. In an exemplary embodiment, the communication component 816 also includes a near field communication (NFC) module to facilitate short range communication. For example, the NFC module may be implemented based on radio frequency identification (RFID) technology, infrared data association (IrDA) technology, ultra-wide band (UWB) technology, Bluetooth (BT) technology and other technologies.

In an exemplary embodiment, the terminal 800 may be implemented by one or more application specific integrated circuits (ASICs), digital signal processors (DSPs), digital signal processing devices (DSPDs), programmable logic devices (PLDs), field programmable gate arrays (FPGA), controllers, microcontrollers, microprocessors, or other electronic components, so as to perform the above image conversion method.

In an exemplary embodiment, there is also provided a non-transitory computer-readable storage medium including instructions, such as the memory 804 including instructions. The instructions are executed by the processor 820 of the terminal 800 to generate the above method. For example, the non-transitory computer-readable storage medium may be an ROM, a random access memory (RAM), a CD-ROM, a magnetic tape, a floppy disk, an optical data storage device, etc.

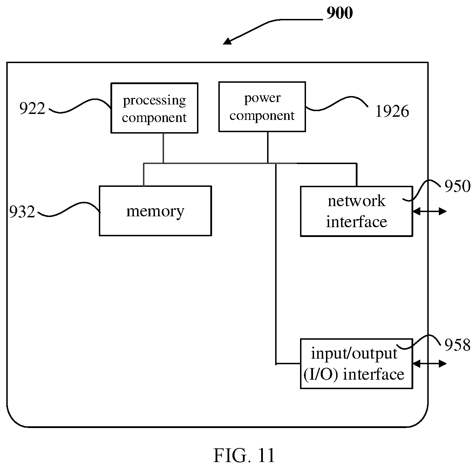

As illustrated in FIG. 11, an embodiment of the disclosure illustrates a structure of an access device. For example, the communication device 900 may be provided as a network-side device. The communication device is a source UE and/or a U2U relay.

Referring to FIG. 11, the communication device 900 includes a processing component 922 which further includes one or more processors, and memory resources represented by a memory 932 for storing instructions executable by the processing component 922, such as an application program. The application program stored in the memory 932 may include one or more modules each corresponding to a set of instructions. In addition, the processing component 922 is configured to execute instructions to execute any of the above method applied to the access device, such as, the method illustrated in any one of FIGs. 3 to 7.

The communication device 900 may further include a power component 926 configured to perform power management of the communication device 900, a wired or wireless network interface 950 configured to connect the communication device 900 to a network, and an input/output (I/O) interface 958. The communication device 900 may operate based on an operating system stored in the memory 932, such as Windows Server TM, Mac OS XTM, UnixTM, LinuxTM, FreeBSDTM or the like.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples be considered as exemplary only, with a true scope and spirit of the disclosure being indicated by the following claims.

It should be understood that the disclosure is not limited to the exact construction that has been described above and illustrated in the accompanying drawings, and that various modifications and changes may be made without departing from the scope thereof. It is intended that the scope of the disclosure only be limited by the appended claims.

## Claims

1. A method for processing information, performed by a source user equipment (UE), comprising:
broadcasting relay information, wherein the relay information is used to indicate whether the source UE is capable of acting as a target UE of a UE-to-UE (U2U) relay communication.

2. The method of claim 1, wherein the relay information comprises:
relay hop count information, indicating a relay hop count supported when the source UE acts as the target UE in the U2U relay communication; and/or
a relay indication, indicating whether the source UE is capable of acting as the target UE of the U2U relay communication.

3. The method of claim 2, wherein
the source UE is willing to act as the target UE of the U2U relay communication, the relay hop count information indicating that the relay hop count supported by the source UE is greater than 0; or
the source UE is unwilling to act as the target UE of the U2U relay communication, the relay hop count information indicating that the relay hop count supported by the source UE is equal to 0 or a value of the relay hop count information is null.

4. The method of claim 2, wherein
the source UE is capable of acting as the target UE of the U2U relay communication, the relay indication being a first value; or
the source UE is capable of acting as the target UE of the U2U relay communication, the relay indication being a second value.

5. The method of claim 4, wherein broadcasting the relay information comprises:
broadcasting an announcement message comprising the relay information.

6. A method for processing information, performed by a user equipment to user equipment (U2U) relay, comprising:
receiving relay information sent by a source UE, wherein the relay information is used to indicate whether the source UE is capable of acting as a target UE of a U2U relay communication.

7. The method of claim 6, further comprising:
updating information of the target UE maintained by the U2U relay based on the relay information.

8. The method of claim 6, wherein the relay information comprises:
relay hop count information, indicating a relay hop count supported when the source UE acts as the target UE in the U2U relay communication; and/or
a relay indication, indicating whether the source UE is capable of acting as the target UE of the U2U relay communication.

9. The method of claim 7 or 8, wherein updating the information of the target UE maintained by the U2U relay based on the relay information comprises:
adding information of the source UE to the information of the target UE, the relay hop count indicated by the relay hop count information being greater than 0; or
ignoring the relay information, the relay hop count indicated by the relay hop count information being equal to 0 or a value of the relay hop count information being null.

10. The method of claim 7 or 8, further comprising:
adding information of the source UE to the information of the target UE, the relay indication being a first value; or
ignoring the relay information, the relay indication being a second value.

11. An apparatus for processing information, comprising:
a sending module, configured to broadcast relay information, wherein the relay information is used to indicate whether the source UE is capable of acting as a target UE of a UE-to-UE (U2U) relay communication.

12. The apparatus of claim 11, wherein the relay information comprises:
relay hop count information, indicating a relay hop count supported when the source UE acts as the target UE in the U2U relay communication; and/or
a relay indication, indicating whether the source UE is capable of acting as the target UE of the U2U relay communication.

13. The apparatus of claim 12, wherein
the source UE is willing to act as the target UE of the U2U relay communication, the relay hop count information indicating that the relay hop count supported by the source UE is greater than 0; or
the source UE is unwilling to act as the target UE of the U2U relay communication, the relay hop count information indicating that the relay hop count supported by the source UE is equal to 0 or a value of the relay hop count information is null.

14. The apparatus of claim 12, wherein
the source UE is capable of acting as the target UE of the U2U relay communication, the relay indication being a first value; or
the source UE is capable of acting as the target UE of the U2U relay communication, the relay indication being a second value.

15. The apparatus of claim 14, wherein the sending module is further configured to:
broadcast an announcement message comprising the relay information.

16. An apparatus for processing information, comprising:
a receiving module, configured to receive relay information sent by a source UE, wherein the relay information is used to indicate whether the source UE is capable of acting as a target UE of a U2U relay communication.

17. The apparatus of claim 16, further comprising:
a processing module, configured to update information of the target UE maintained by the U2U relay based on the relay information.

18. The apparatus of claim 16, wherein the relay information comprises:
relay hop count information, indicating a relay hop count supported when the source UE acts as the target UE in the U2U relay communication; and/or
a relay indication, indicating whether the source UE is capable of acting as the target UE of the U2U relay communication.

19. The apparatus of claim 17 or 18, further comprising:
a processing module, configured to add information of the source UE to the information of the target UE, the relay hop count indicated by the relay hop count information being greater than 0; or ignore the relay information, the relay hop count indicated by the relay hop count information being equal to 0 or a value of the relay hop count information being null.

20. The apparatus of claim 17 or 18, further comprising:
a processing module, configured to add information of the source UE to the information of the target UE, the relay indication being a first value; or ignore the relay information, the relay indication being a second value.

21. A communication device, comprising a processor, a transceiver, a memory and an executable program stored on the memory and capable of being run by the processor, wherein the processor is configured to execute the method of any one of claims 1 to 5 or 6 to 10 when running the executable program.

22. A computer storage medium for storing an executable program; the method of any one of claims 1 to 5 or 6 to 10 is realized after the executable program is executed by the processor.

23. A communication system comprising a source user equipment (UE) and a user equipment to user equipment (U2U) relay;
the source UE is configured to perform the method of any one of claims 1 to 5;
the U2U relay is configured to perform the method of any one of claims 6 to 10.
